Europäisches Patentamt

European Patent Office

Office européen des brevets

(11) Veröffentlichungsnummer: **0 162 416**
**A2**

(12) # EUROPÄISCHE PATENTANMELDUNG

(21) Anmeldenummer: 85106007.9

(22) Anmeldetag: 15.05.85

(51) Int. Cl.⁴: **C 04 B 28/02**
//(C04B28/02, 14:04, 14:10, 16:06, 24:24)

(30) Priorität: 24.05.84 DE 3419453

(43) Veröffentlichungstag der Anmeldung:
27.11.85 Patentblatt 85/48

(84) Benannte Vertragsstaaten:
AT DE FR GB NL

(71) Anmelder: Brase, Jerry L.
1660 Silvaner Avenue
St. Helena California 94574(US)

(72) Erfinder: Hoffmann, Ingrid
Grünenthal 6
D-5974 Herscheid(DE)

(74) Vertreter: Mentzel, Norbert, Dipl.-Phys. et al,
Patentanwälte Dipl.-Phys. Buse Dipl.-Phys. Mentzel
Dipl.-Ing. Ludewig Unterdörnen 114
D-5600 Wuppertal 2(DE)

(54) Aus extrudierten Profilen hergestellte Bauteile, insbesondere für die Einbettung in Beton.

(57) Aus extrudierten Profilen hergestellte Bauteile, insbesondere für die Einbettung in Beton, wie Distanzstücke, Durchführungen, Halteelemente od.dgl., bestehend aus einem Zement und Anrührwasser aufweisenden Zementmörtel, wobei der extrudierbare Zementmörtel aus etwa 50 bis 70 Gewichtsanteilen Zement, etwa 10 bis 20 Gewichtsanteilen Ton und etwa 8 bis 39 Gewichtsanteilen Füllstoffen in Form von zerkleinerten Mineralien verschiedenster Sieblinien, wie Quarzmehl, Basaltmehl, Schamottemehl od.dgl., besteht und das Gemisch mit etwa 10 bis 30 Gewichtsanteilen Wasser angerührt ist.

77                    <u>Kennwort</u>: "Zementmörtel"

Jerry L. Brase, 1160 Silvaner Avenue,
St. Helena, Californien 94 574, USA

---

Aus extrudierten Profilen hergestellte Bauteile, insbesondere für die Einbettung in Beton

---

Die Erfindung betrifft aus extrudierten Profilen hergestellte Bauteile, insbesondere für die Einbettung in Beton, wie Distanzstücke, Durchführungen, Halteelemente od.dgl., bestehend aus einem Zement und Anrührwasser aufweisenden Zementmörtel.

Der bisher hierfür verwendete Zementmörtel weist neben dem Zement und dem Anrührwasser eine Beimischung von Asbestfasern auf und eignet sich vortrefflich zur Verarbeitung in Strangpressen od.dgl. Die Verarbeitung der Asbestfasern ist jedoch problematisch, da sie als Erreger für Lungenkrebs angesehen werden. Bei einem Weglassen der Asbestfasern neigt der Zementmörtel jedoch zur Rißbildung und kann nicht zur Verarbeitung in Strangpressen od.dgl. benutzt werden, da bei der Anwendung von Druck auf diesen Mörtel das Wasser abgedrückt wird und der Mörtel nicht mehr plastisch bleibt.

Der Erfindung liegt die Aufgabe zugrunde, aus extrudierten Profilen hergestellte Bauteile der eingangs erläuterten Art zu schaffen, bei denen solche Nachteile

0162416

vermieden sind und die Herstellung in einfacher Weise
in Strangpressen od.dgl. möglich ist.

Diese Aufgabe ist erfindungsgemäß dadurch gelöst, daß
der extrudierbare Zementmörtel aus etwa 50 bis 70
Gewichtsanteilen Zement, etwa 10 bis 20 Gewichtsanteilen Ton und etwa 8 bis 39 Gewichtsanteilen Füllstoffe in Form von zerkleinerten Mineralien verschiedenster Sieblinien, wie Quarzmehl, Basaltmehl,
Schamottemehl od.dgl. besteht, und das Gemisch mit etwa
10 bis 30 Gewichtsanteilen Wasser angerührt ist. Dieser
Zementmörtel kann in vorteilhafter Weise in Strangpressen od.dgl. verarbeitet werden. Durch die 50 bis 70
Gewichtsanteile Zement erhält der aus dem Zementmörtel
hergestellte Bauteil zumindest annähernd das Aussehen
von Beton. Durch die 10 bis 20 Gewichtsanteile Ton
wird das Fließen des Zementmörtels in einer Strangpresse od.dgl. gewährleistet und die Festigkeit des
aus dem Zementmörtel hergestellten Gegenstandes erhöht,
da beim Abbinden des Zements die wandernden Calciumionen
zunächst gebunden und dann langsam freigegeben werden.
Die 8 bis 39 Gewichtsanteile Füllstoffe in Form von
zerkleinerten Mineralien verschiedener Sieblinien, wie
Quarzmehl, Basaltmehl, Schamottemehl od.dgl., gewährleisten ein Anklammern des Zements an den Füllstoff
beim Mischen, so daß eine dichte Zementmatrix erzielt
wird. Die 10 bis 30 Gewichtsanteile Wasser dienen zum
Abbinden des Zements.

Dem Gemisch können 0,1 bis 5, vorzugsweise 0,5 bis 1
Gewichtsanteile aus verschiedenen Werkstoffe bestehende
Faser-Werkstoffe beigemengt sein. Mit diesen beigemengten
Faser-Werkstoffen wird die Festigkeit der
aus dem Zementmörtel hergestellten Bauteile erhöht, da die Fasern als Armierung angesehen werden können. Die Faser-Werkstoffe können sich dabei ineinander verkrallen. Außerdem wird dadurch das Fließverhalten in der Bewegung des Zementmörtels verbessert, da sich ein Teil des Anrührwassers auf den Oberflächen der Fasern absetzt und nicht ausgepreßt werden kann. Die Abbindung des Zements mit dem Wasser wird dadurch nicht beeinträchtigt.

Dem Gemisch können 0,1 bis 5, vorzugsweise 0,5 bis 1 Gewichtsanteile faserförmige, synthetische Zellulose, wie Polyäthylene, Polyoxymethylene, Polyacrylnitril od.dgl. beigemengt sein. Diese faserförmige, synthetische Zellulose eignet sich besonders wohlfeil für die Erhöhung der Festigkeit der Bauteile und zur Verbesserung des Fließverhaltens in der Bewegung des Zementmörtels.

Dem Gemisch kann eine Mischung aus faserförmigen Polyäthylenen, Polyoxymethylenen und Polyacrylnitril od.dgl. beigemengt sein. Diese Mischung von aus Kunststoff bestehenden Fasern hat sich in der Praxis als besonders vorteilhaft erwiesen.

Etwa 1/3 der erforderlichen Wassermenge kann durch wasserlösliche, alkali-resistente Harze, wie Äthoxyline, ersetzt sein. Diese wasserlöslichen, alkali-resistenten Harze, wie Äthoxyline, erhöhen die Plastizität des Zementmörtels und die Festigkeit der aus dem Zementmörtel hergestellten Bauteile. Hohlräume des Mörtels, in denen vor dem Abbinden des Zements Wasser vorhanden war, werden durch die Harze ausgefüllt. Die gehärteten, d.h. vernetzten Harze weisen eine hervorragende Haftfestigkeit auf den verschiedensten Materialien auf. Sie zeichnen sich weiter durch hohe Zähigkeit, Elastizität und sehr gute Chemikalienfestigkeit aus. Die im Zementmörtel normalerweise vorhandenen Hohlräume werden durch das Harz ausgefüllt, so daß in das fertige Bauteil deswegen Wasser nicht eindringen kann. Das aus dem Zementmörtel hergestellte Bauteil ist somit weitgehend wasserdicht.

In der Mischung können fehlende Gewichtsanteile von Zement und/oder Ton durch die mineralischen Füllstoffe ersetzt sein. Je nach der gewünschten Qualität kann somit der teure Zement durch wohlfeilere Füllstoffe ersetzt werden.

Der mineralische Füllstoff kann mindestens teilweise durch kleine Hohlkugeln aus Aluminium-Silikat ersetzt sein. Diese kleinen Hohlkugeln aus Aluminium-Silikat sind sehr leicht, so daß die damit hergestellten Bauteile ebenfalls sehr leicht sind.

Im folgenden wird die Erfindung im einzelnen beschrieben:

Die aus extrudierten Profilen hergestellten Bauteile werden aus einem Zementmörtel gebildet, der etwa 70 Gewichtsanteile Zement, etwa 20 Gewichtsanteile Ton, etwa 8,5 Gewichtsanteile Füllstoffe in Form von zerkleinerten Mineralien verschiedenster Sieblinien, wie Quarzmehl, Basaltmehl, Schamottemehl od.dgl., etwa 1,5 Gewichtsanteile aus Kunststoff bestehende Faser-Werkstoffe beinhaltet, die miteinander vermischt und mit etwa 19 Gewichtsanteilen Wasser verrührt werden. Etwa 1/3 des Anrührwassers kann durch wasserlösliche, alkali-resistente Harze, wie Äthoxyline, ersetzt sein. Dieser Zementmörtel eignet sich besonders gut dafür, in Strangpressen od.dgl. verarbeitet zu werden. Dabei hat sich als besonders vorteilhaft herausgestellt, daß im Ton nicht weniger als 30 % $Al_2O_3$ vorhanden sein muß. Ebenso hat sich als vorteilhaft herausgestellt, wenn im Ton höchstens 10 % und weniger als 6 % Kaolin enthalten ist. Mit einem solchen Ton als Beimischung im Zement wird die erforderliche Fließfähigkeit erzielt. Die aus diesem Zementmörtel hergestellten Bauteile weisen eine gute Festigkeit auf und sind weitgehendst wasserdicht und witterungsbeständig.

Durch den hohen Zementanteil erhalten die aus dem Zementmörtel hergestellten Bauteile weitgehendst das Aussehen von Beton. Durch die Beifügung des Tons wird das Fließen des Zementmörtels in einer Strangpresse od.dgl. gewährleistet und die Festigkeit der aus dem Zementmörtel hergestellten Bauteile erhöht. Beim Abbinden des Zements werden die wandernden Calciumionen zunächst gebunden und dann langsam freigegeben. Dadurch wird eine vollständige Abbindung des Zements erzielt. Durch die Beifügung der Füllstoffe in Form von zerkleinerten Mineralien verschiedener Sieblinien, wie Quarzmehl, Basaltmehl, Schamottemehl od.dgl., wird eine dichte Zementmatrix erzielt, da der Zement sich an den einzelnen Partikeln des Füllstoffes anklammern kann.

Die beigefügten, aus verschiedenen Werkstoffen und vorzugsweise aus Kunststoff bestehenden Faser-Werkstoffe sind vorteilhaft von faserförmiger, synthetischer Zellulose, wie Polyäthylene, Polyoxymethylene und Polyacrylnitril,gebildet. Dabei hat sich als besonders vorteilhaft herausgestellt, wenn eine Mischung von diesen drei Faserarten benutzt wird. Die Gewichtsanteile dieser Faser-Werkstoffe darf nicht 5 übersteigen, da sonst die Fließfähigkeit des Zementmörtels nachläßt. Mit diesem Faser-Werkstoff wird die Festigkeit der hergestellten Bauteile wesentlich erhöht, da die Fasern sich als Armierung im Werkstoff auswirken.

Die wasserlöslichen, alkali-resistenten Harze, wie Äthoxyline, erhöhen die Plastizität des Zementmörtels und die Festigkeit der aus dem Zementmörtel hergestellten Bauteile. Die gehärteten, d.h. vernetzten Harze weisen eine hervorragende Haftfähigkeit auf den verschiedensten Materialien auf. Sie zeichnen sich weiter durch hohe Zähigkeit, Elastizität und sehr gute Chemikalienfestigkeit aus. Weiterhin wird durch diese Harze der aus dem Zemenmörtel hergestellte Bauteil zumindest nahezu wasserdicht, da im Zementmörtel vorhandene, mit Wasser gefüllte Hohlräume mit dem Harz verschlossen werden und somit ein erneutes Eindringen von Wasser verhindern.

Die Gewichtsanteile Ton in dem Zementmörtel können auch zumindest teilweise durch die wasserlöslichen, alkaliresistenten Harze, wie Äthoxyline, ersetzt werden. Es hat sich gezeigt, daß diese Harze auch für das gute Fließverhalten des Zementmörtels in einer Strangpresse od.dgl. beitragen. Die Harze sind jedoch wesentlich teurer als der wohlfeile Ton, so daß auf den wohlfeilen Ton zurückgegriffen wird.

Aus dem angegebenen Zementmörtel können in einfacher Weise mit einer Strangpresse od.dgl. Bauteile, wie Distanzstücke, Durchführungen, Rohre, Halteelemente od.dgl., hergestellt werden. Je nach der erforderlichen Festigkeit, die die Bauteile aufweisen müssen, können dabei die Gewichtsanteile der verschiedenen Bestandteile variiert werden.

Wie bereits erwähnt, ist die erläuterte Ausführung der
Erfindung lediglich eine beispielsweise Verwirklichung
und die Erfindung nicht darauf beschränkt. Vielmehr
sind noch mancherlei andere Ausführungen und Anwendungen
möglich.

Kennwort: "Zementmörtel"


Jerry L. Brase, 1660 Silvaner Avenue,
St. Helena, Californien 94 574, USA

---

A n s p r ü c h e :

---


1.) Aus extrudierten Profilen hergestellte Bauteile, insbesondere für die Einbettung in Beton, wie Distanzstücke, Durchführungen, Halteelemente od.dgl., bestehend aus einem Zement und Anrührwasser aufweisenden Zementmörtel,

d a d u r c h   g e k e n n z e i c h n e t ,

daß der extrudierbare Zementmörtel aus etwa 50 bis 70 Gewichtsanteilen Zement, etwa 10 bis 20 Gewichtsanteilen Ton und etwa 8 bis 39 Gewichtsanteilen Füllstoffen in Form von zerkleinerten Mineralien verschiedenster Sieblinien, wie Quarzmehl, Basaltmehl, Schamottemehl od.dgl., besteht und das Gemisch mit etwa 10 bis 30 Gewichtsanteilen Wasser angerührt ist.

2.) Bauteile nach Anspruch 1, dadurch gekennzeichnet, daß dem Gemisch 0,1 bis 5, vorzugsweise 0,5 bis 1 Gewichtsanteile aus verschiedenen Werkstoffen bestehende Faserwerkstoffe beigemengt sind.

3.) Bauteile nach Anspruch 2, dadurch gekennzeichnet, daß dem Gemisch 0,1 bis 0,5, vorzugsweise 0,5 bis 1 Gewichtsanteile faserförmige, synthetische Zellulose, wie Polyäthylene, Polyoxymethylene, Polyacrylnitril od.dgl. beigemengt sind.

4.) Bauteile nach Anspruch 3, dadurch gekennzeichnet, daß dem Gemisch eine Mischung aus faserförmigen Polyäthylene, Polyoxymethylene und Polyacrylnitril od.dgl.beigemengt ist.

5.) Bauteile nach einem der Ansprüche 1 bis 4, dadurch gekennzeichnet, daß etwa 1/3 der erforderlichen Wassermenge durch wasserlösliche, alkali-resistente Harze, wie Äthoxyline, ersetzt ist.

6.) Bauteile nach einem der Ansprüche 1 bis 5, dadurch gekennzeichnet, daß in der Mischung fehlende Gewichtsanteile von Zement und/oder Ton durch die mineralischen Füllstoffe ersetzt sind.

7.) Bauteile nach einem der Ansprüche 1 bis 6, dadurch gekennzeichnet, daß der mineralische Füllstoff mindestens teilweise durch kleine Hohlkugeln aus Aluminium-Silikat ersetzt ist.